# EUROPEAN PATENT APPLICATION

(11) **EP 4 711 739 A1**
(43) Date of publication of application: **18.03.2026**
(21) Application number: 24826159.6
(22) Date of filing: 04.06.2024
(51) Int. Cl.: G01N 3/08, G01N 3/04, G01N 3/06, H01M 10/42

(54) **APPARATUS FOR MEASURING PHYSICAL PROPERTIES OF ELECTRODE AND/OR SEPARATOR**

(30) Priority: 19.06.2023 KR 20230078300; 03.06.2024 KR 20240072521
(71) Applicant: LG Energy Solution, Ltd., Seoul 07335 (KR)
(72) Inventor: LEE, Hansol, Daejeon 34122 (KR); CHOI, Yongseok, Daejeon 34122 (KR); LEE, Myoung Gyu, Seoul 06346 (KR); MYUNG, Dongjoon, Seoul 08826 (KR); KIM, Chanyang, Seoul 08826 (KR); KIM, Jaeseung, Seoul 08826 (KR)
(74) Representative: Goddar, Heinz J.
(86) International application number: PCT/KR2024/007604
(87) International publication number: WO 2024/262837

(57) **Abstract**

A measuring apparatus for an electrode and/or a separator for a secondary battery according to one embodiment of the present disclosure includes a container including a body in which a specimen and an electrolyte can be stored inside, and a measuring unit for measuring physical properties of the specimen, wherein the specimen is at least one of an electrode and a separator for a secondary battery, and the measurement is performed under a state where the specimen is immersed with the electrolyte.

## Description

### [TECHNICAL FIELD]

### Cross Citation with Related Application(s)

This application claims the benefit of Korean Patent Application No. 10-2023-0078300 filed on June 19, 2023 and Korean Patent Application No. 10-2024-0072521 filed on June 3, 2024 in the Korean Intellectual Property Office, the disclosures of which are incorporated herein by reference in their entirety.

The present disclosure relates to an apparatus for measuring physical properties of an electrode and/or a separator, and more particularly, to an apparatus for measuring physical properties of an electrode and/or a separator under a state where the electrode and/or separator for a secondary battery are immersed with an electrolyte.

### [BACKGROUND]

A secondary battery is a battery that can be charged and discharged. Secondary batteries are widely used in portable small-sized electronic devices such as mobile phones and laptops, or as power sources for driving motors in electric tools, automobiles, and the like. The inside of a secondary battery may be composed of a cathode, an anode, a separator, an electrolyte, and the like, and the case thereof may be made of a metal plate or a pouch.

According to a prior art, when measuring physical properties of an electrode and/or a separator in cases such as tension, compression, and punching, specimens of an electrode and/or a separator were tested in a dry state. However, in the case of secondary batteries using liquid electrolytes, the electrodes and separators in the actual secondary batteries exist in a state impregnated with the electrolyte. Thereby, the polymer (electrode binder, separator) is softened by the electrolyte, and the physical properties (mechanical behavior properties) of the secondary battery change due to the penetration (impregnation) of the electrolyte into the pores of the electrode and separator.

Therefore, in order to evaluate the manufacturing process of a secondary battery or the performance of a secondary battery more accurately, there is a need for a technology that can be configured to approximate to the state/environment of the electrode and separator of an actual secondary battery and measure physical properties of the electrode and/or the separator.

### [DETAILED DESCRIPTION OF THE INVENTION]

### [Technical Problem]

It is an object of the present disclosure to provide an apparatus for measuring physical properties of an electrode and/or a separator under a state where the electrode and/or separator for a secondary battery are immersed with an electrolyte.

However, the technical objective of the present disclosure is not limited to the aforementioned one, and may be extended in various ways within the scope of the technical idea included in the present disclosure.

### [Technical Solution]

According to one embodiment of the present disclosure, there is provided a measuring apparatus, comprising: a container including a body in which a specimen and an electrolyte can be stored inside; and a measuring unit for measuring physical properties of the specimen, wherein the specimen is at least one of an electrode and a separator for a secondary battery, and the measurement is performed under a state where the specimen is immersed with the electrolyte.

The container may comprise at least one of an electrolyte inlet port provided at an upper part and an electrolyte outlet port provided at a lower part.

The container may comprise a viewing window through which the inside of the container can be viewed.

The container further comprises a door that can open and close the body, the door comprises an opening part, and the viewing window may be provided in the opening part.

The measuring apparatus may further comprise a sealing member provided between the body of the container and the door to prevent the electrolyte from leaking.

The measuring apparatus may further comprise a locking device that fixes the door to the body of the container when the door is closed,.

The measuring apparatus further comprises a bar that penetrates through the upper surface of the container and is movable toward the specimen or to its opposite direction, and also can tension or pressurize the specimen by the movement of the bar.

The end part of the bar is provided with a pair of grippers capable of gripping both end parts of the specimen, respectively, wherein one of the pair of grippers may be detachably coupled to the end part of the bar, and the other of the pair of grippers may be detachably coupled to the lower surface inside the body of the container.

The end part of the bar is provided a press-fit member that is detachably coupled thereto, the lower surface inside the body of the container is provided with a specimen mounting member that is detachably coupled thereto, the press-fit member comprises a tip, and the specimen mounting member comprises a specimen mounting part provided with a concave part at the central part of the upper end, and the central part of the specimen may be spaced apart from the specimen mounting part.

The end part of the bar is provided with a compression member that is detachably coupled thereto, the lower surface inside the body of the container is provided with a specimen mounting member that is detachably coupled thereto, the compression member includes a flat-shaped compression part, and the specimen mounting member includes a specimen mounting part provided at the upper end of the upper end, and the specimen mounting part may have a flat shape.

The measuring unit may be a load cell connected to the bar.

The bar moves downward, and the repulsive force transmitted to the bar from the specimen is measured and converted by the load cell, thereby measuring the tensile force occurring radially at the central part of the specimen.

The measuring unit may be a camera unit.

An image of the specimen may be captured by the camera unit to measure the displacement of the specimen.

The camera unit may be a DIC (digital image correlation) camera.

The measuring apparatus further comprises a correction image for correcting an error capable of occurring in an image captured by the measuring unit due to refraction or reflection of light by the electrolyte, wherein the correction image as a reference image includes a plurality of line segments on the substrate, and each of the plurality of line segments has the same length but a different slope, and wherein the correction image immersed with the electrolyte may be captured by the measuring unit, so that the measuring unit may be corrected until all of the plurality of line segments have the same length.

Each of the plurality of line segments may have an inclination angle that sequentially increases with one edge of the substrate as a reference line.

At least some of the line segments among the plurality of line segments may be arranged at approximately equal angles to each other.

The starting points of at least some of line segments among the plurality of line segments may be different, and the ending points of at least some of the line segments among the plurality of line segments may be different.

The specimen may be stacked type mono-cell in which the electrode and the separator are stacked.

### [Advantageous Effects]

According to the present disclosure, the apparatus measures the physical properties of an electrode and/or separator for a secondary battery under a state where the electrode and/or separator are immersed with an electrolyte, which allows testing under conditions similar to the actual battery cell usage environment, thereby more accurately evaluating physical properties of the electrode and/or separator, and/or battery cell.

The effects of the present disclosure are not limited to the effects mentioned above and additional other effects not described above will be clearly understood from the detailed description of the appended claims by those skilled in the art.

### [BRIEF DESCRIPTION OF THE DRAWINGS]

FIG. 1 is a front view of an apparatus 100 for measuring physical properties of an electrode and/or a separator according to one embodiment of the present disclosure;
FIG. 2 illustrates a case where an electrolyte 20 is stored in the measuring apparatus 100 of FIG. 1;
FIG. 3 is a partial enlarged view of a side surface of the measuring apparatus 100 of FIG. 1;
FIG. 4 illustrates an example of a specimen 10 mounted on the measuring apparatus 100 of FIG. 1;
FIG. 5 illustrates a case where a camera unit 300 for capturing and measuring a specimen 10 is mounted on the measuring apparatus 100 of FIG. 1;
FIG. 6 shows a camera correction image 310 for correcting before measuring with the camera unit 300 of FIG. 5 in the measuring apparatus 100 of FIG. 1;
FIG. 7 is a front view of an apparatus 100 for measuring physical properties of an electrode and/or a separator according to another embodiment of the present disclosure;
FIG. 8 illustrates a case where an electrolyte 20 is stored in the measuring apparatus 100 of FIG. 7;
FIG. 9 is an enlarged view of the press-fit member 220 and the specimen mounting member 230 of FIG. 7;
FIG. 10 illustrates an example of a specimen 10 mounted on the measuring apparatus 100 of FIG. 7;
FIG. 11 is a front view of an apparatus 100 for measuring physical properties of an electrode and/or a separator according to another embodiment of the present disclosure;
FIG. 12 illustrates a case where an electrolyte 20 is stored in the measuring apparatus 100 of FIG. 11;
FIG. 13 is an enlarged view of the compression member 240 and the specimen mounting member 250 of FIG. 11;
FIG. 14 is a front view of the compression member 240 of FIG. 13;
FIG. 15 is a top view of the specimen mounting member 250 of FIG. 13;
FIG. 16 shows an example of a specimen 10 mounted on the measuring apparatus 100 of FIG. 11;
FIG. 17 shows a table comparing a case where a test was performed for the anode by a dry process according to a comparative example and a case where a test was performed for the anode by a wet process according to an embodiment of the present disclosure;
FIG. 18 shows a table comparing a case where a test was performed for the cathode by a dry process according to a comparative example and a case where a test was performed for the cathode by a wet process according to an embodiment of the present disclosure;
FIG. 19 shows a table comparing a case where a test was performed for the separator by a dry process according to a comparative example and a case where a test was performed for the separator by a wet process according to an embodiment of the present disclosure;
FIG. 20 shows graphs of comparative examples and examples at the cell level; and
FIG. 21 shows a table showing the maximum load values in the graph of FIG. 20.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, each component of the apparatus for measuring physical properties of an electrode and/or a separator according to one embodiment of the present disclosure and the measurement (testing) performed by the corresponding measuring apparatus will be described with reference to the accompanying drawings.

### Uniaxial tensile test

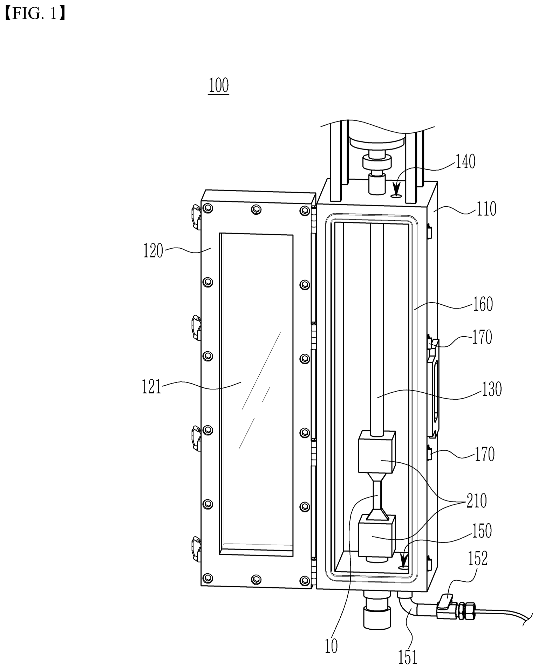

First, FIGS. 1 to 6 illustrate a case where a uniaxial tensile test is performed with an apparatus 100 for measuring physical properties of an electrode and/or a separator according to an embodiment of the present disclosure.

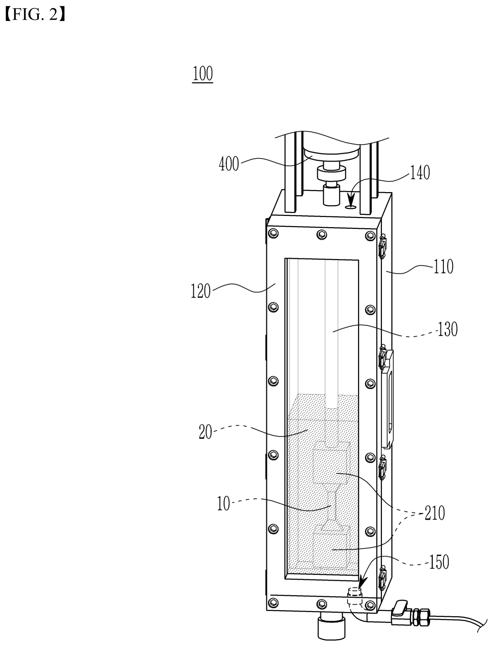

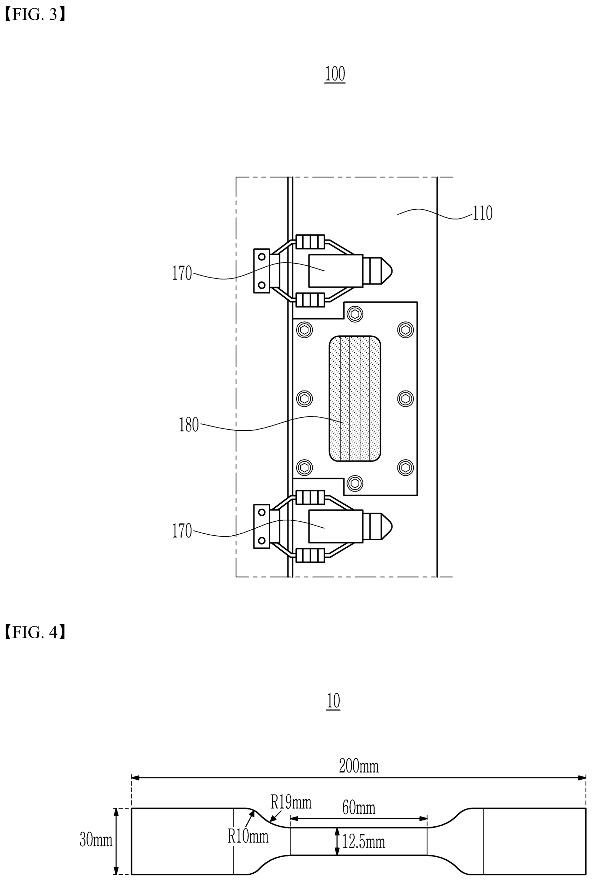

FIG. 1 is a front view of an apparatus 100 for measuring physical properties of an electrode and/or a separator according to one embodiment of the present disclosure. FIG. 2 illustrates a case where an electrolyte 20 is stored in the measuring apparatus 100 of FIG. 1. FIG. 3 is a partial enlarged view of a side surface of the measuring apparatus 100 of FIG. 1. FIG. 4 illustrates an example of a specimen 10 mounted on the measuring apparatus 100 of FIG. 1.

An apparatus 100 for measuring physical properties of an electrode and/or a separator according to one embodiment of the present disclosure comprises a container in which a specimen 10 and an electrolyte 20 can be stored inside. The container comprises a body 110 (hereinafter referred to as "container body") in which a specimen 10 and an electrolyte 20 are stored inside, a door 120 that is arranged on one surface (e.g., the front surface) of the body and can be opened and closed, a bar 130 that penetrates through the upper surface of the container body 110 and is movable toward the specimen 10 or to its opposite direction, an electrolyte inlet port 140 provided on an upper part of the container body 110, and an electrolyte outlet port 150 provided on a lower part of the container body 110.

Unlike the prior art using a dry process, the present disclosure uses a wet process, and can measure properties (physical properties, etc.) of the specimen 10 under a state where the specimen 10 of the electrode and/or separator is immersed with the electrolyte 20. Not only the specimen 10 but also the electrolyte 20 can be stored inside the container body 110, and the container body 110 can be made of, for example, metal or PVC material, but the present disclosure is not limited thereto, and can be made of a material that has low reactivity with the electrolyte solvent component and has rigidity.

When the specimen 10 is stored in the container body 110, the door 120 is closed. The container body 110 and the door 120 are provided with a locking device 170 (see FIG. 3 for details) that can firmly fix the container body 110 and the door 120 to each other. The door 120 is provided with a viewing window 121 through which the inside of the container body 110 can be viewed. Through the viewing window 121, measurement can be performed while observing the state in which the specimen 10 and the electrolyte 20 are stored. An opening part may be provided in the door 120 and the viewing window 121 may be attached to the opening part. A sealing member (not shown) can be further included around the opening part so as to prevent the electrolyte 20 from leaking. The viewing window 121 may be fabricated from, for example, a tempered glass material, but the present disclosure is not limited thereto, and may be made from a material that has low reactivity with the electrolyte solvent component and has rigidity, the inside of which can be seen through the naked eye or a camera.

Meanwhile, the present disclosure is not limited to those illustrated in the figure, and various modifications and changes can be made, such as the viewing window 121 being provided in the container body 110 instead of the door 120.

The electrolyte inlet port 140 is provided in a through hole shape at the upper part of the container body 110, and a piping (not shown) for supplying the electrolyte 20 through the electrolyte inlet port 140 is connected to the inside of the container body 110 to supply the electrolyte 20. The electrolyte outlet port 150 is provided in a through hole shape at the lower part of the container body 110. A piping 151 and an open/close valve 152 are connected to the electrolyte outlet port 150.

After mounting the specimen 10 and closing the door 120, the electrolyte 20 flows into the container body 110 under a state where the open/close valve 152 is closed before measurement, whereby the testing can be performed for the specimen 10 under a state where the electrolyte 20 is contained inside the container body 110. After the measurement has been completed in the wet-type testing, it is possible to open the open/close valve 152 and discharge the electrolyte 20 to the outside of the container body 110. Alternatively, even when it is desired to perform a dry-type testing, it is possible to open the open/close valve 152 and discharge the electrolyte 20 to the outside of the container body 110, followed by testing.

The measuring apparatus further comprises a sealing member 160 between the container body 110 and the door 120. Thereby, it is possible to prevent the electrolyte 20 from leaking through the gap between the container body 110 and the door 120. The sealing member 160 may be provided in the container body 110 as shown in FIG. 1, but the present disclosure is not limited thereto, and can be modified in various ways, such as being provided in the door 120.

The bar 130 is located to penetrate through the upper surface of the container body 110, and can move toward the specimen 10 and to its opposite direction. Various members for measurement are mounted at the end part of the bar 130.

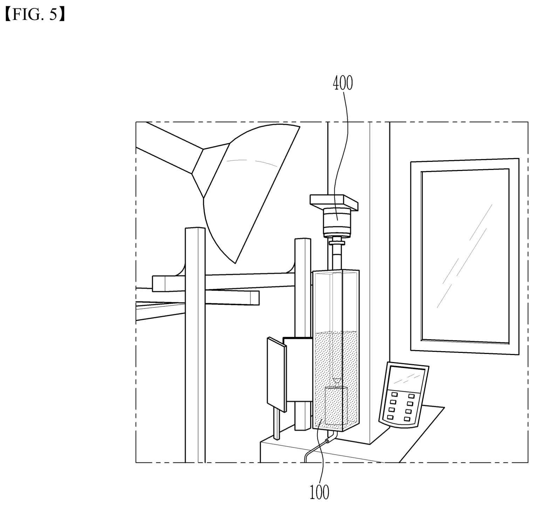

An embodiment of FIG. 1 is a case of performing a uniaxial tensile test of a specimen 10, wherein a pair of grippers 210 capable of gripping both end parts of a specimen 10 are provided at the end part of a bar 130. One of the pair of grippers 210 is detachably coupled to the end part of the bar 130, and the other of the pair of grippers 210 is detachably coupled to the lower surface inside the container body 110. A specimen 10 is mounted between the pair of grippers 210, and the bar 130 pulls the specimen 10 while moving in a height direction from the lower part to the upper part of the container body 110. The displacement of the tensioned specimen 10 can be measured by capturing an image of the specimen 10 with a camera unit 300 (see FIG. 5) described below.

FIG. 3 is a partial enlarged view of the side surface of the measuring device 100 of FIG. 1. A small-sized viewing window 180 is further provided on the side surface of the container body 110 to check whether the specimen 10 is properly mounted, etc.

FIG. 4 illustrates one embodiment of a specimen 10 provided for a uniaxial tensile test. The specimen 10 may be prepared, for example, as shown in FIG. 4, and mounted between a pair of grippers 210.

In order to prevent early fracture of the specimen 10, the ASTM E345 standard specimen can be partially modified as shown in FIG. 4 to prepare in a shape with curvature (e.g., R19 mm, R10 mm). However, the present disclosure is not limited to those illustrated in the figure, and may modified and changed in various ways, such as being applied by modifying the dimensions of the whole or part of the specimen 10, or being tested by preparing the specimen 10 in a strip or band shape in the case of a uniaxial tensile test.

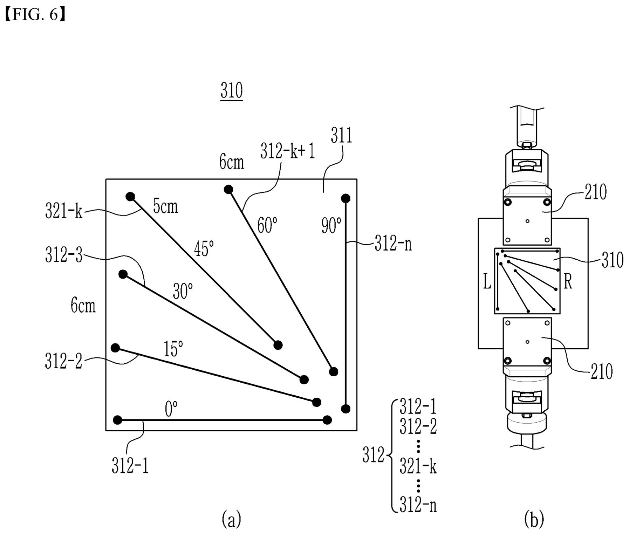

FIG. 5 illustrates a case where a camera unit 300 for capturing and measuring a specimen 10 is mounted on the measuring apparatus 100 of FIG. 1. FIG. 6 shows a camera correction image 310 for correcting before measuring with the camera unit 300 of FIG. 5 in the measuring apparatus 100 of FIG. 1.

In this case, the camera unit 300 corresponds to the measuring unit. The camera unit 300 is arranged at the front of the container body 110. The camera unit 300 may be, for example, a DIC(digital image correlation) camera, and captures an image of the specimen 10 inside the body 110 to measure the displacement of the specimen 10. When the displacement data of the specimen 10 transmitted from the camera unit 300 is input to the computer, the displacement value of the specimen 10 is converted into various physical values such as deformation rate by the processor of the computer.

In the case of wet-type testing, it may be difficult to measure the degree of deformation (e.g., deformation rate) of the specimen 10 within the desired accuracy due to refraction or reflection of light by the electrolyte 20, and thus, the uniaxial tensile test of the specimen 10 impregnated with the electrolyte 20 can use the 2D-DIC (2 dimension-digital image correlation) measurement technique. In the 2D-DIC measurement, the camera unit 300 and the specimen 10 are aligned in a straight line.

Before testing the specimen 10, the image captured by the camera unit 300 is first corrected using the correction image 310 in FIG. 6 so that it has an actual, accurate length value, rather than a value occurring an error due to refraction or reflection of light by the electrolyte 20. FIG. 6(a) is an example of the correction image 310, and FIG. 6(b) illustrates a case where the correction image 310 is mounted between a pair of grippers 210 of FIG. 1.

The correction image 310 is mounted between a pair of grippers 210 of FIG. 1, and the correction image 310 is arranged inside the container body 110. The inside of the container body 110 is filled with an electrolyte 20. The position of the camera 300 is then adjusted until all length values of the line segments placed in the correction image 310, which serves as the reference image, are equal.

The correction image 310 of FIG. 6 is configured such that, for example, a plurality of line segments 312 are arranged on a square plate-shaped substrate 311. First, each of the plurality of line segments 312; 312-1, 312-2, 312-3, ..., 312-k, 312-k+1, ..., 312-n (where k is a natural number from 1 to n) has the same length. In addition, each of the plurality of line segments 312 has a different slope (a straight line extending the plurality of line segments has a different slope).

In more detail, each of the plurality of line segments 312 may have an inclination angle that sequentially increases with one edge of a substrate 311 as a reference line (e.g., a horizontal line or a vertical line). The example of FIG. 6 exemplarily shows an inclination angle when the horizontal line (-x axis line) is used as a reference line.

At this time, as for at least some of the plurality of line segments 312, the difference value in inclination angle between adjacent line segments may be equal. FIG. 6 exemplarily shows the case in which the inclination angle of the line segment 312-1 is 0 degrees, the inclination angle of the line segment 312-2 is 15 degrees, the inclination angle of the line segment 312-3 is 30 degrees, the inclination angle of the line segment 312-k (k=4) is 45 degrees, and the inclination angle of the line segment 312-k+1 (k=4) is 60 degrees, which sequentially increase by 15 degrees.

That is, at least some of the plurality of line segments 312 may be arranged at equal angles to each other. Therefore, rather than arranging the line segments 312 densely in a certain range, arranging them (i.e., evenly arranging) so that the difference in the inclination angle between adjacent line segments 312 is equal may be advantageous in correcting errors in a wider range.

However, the present disclosure is not limited to those set forth above, and if an environment is one in which errors easily occur within a specific range of inclination angles, the invention may be modified and changed in a way that the line segments are arranged more densely in the specific range of inclination angles.

In addition, the starting points of at least some of the line segments 312 may be equal, but may also be different as shown in FIG. 6. Similarly, the ending points of at least some of the line segments 312 may be equal, but may also be different as shown in FIG. 6.

When the starting points of the plurality of line segments 312 are all different, and the ending points of the plurality of line segments 312 are all different, image correction can be performed over a wider area. However, the present disclosure is not necessarily limited thereto, and can be embodied through various variations and changes in conformity with the environment in which the invention is applied.

By employing the correction image 310 according to the present disclosure, the image captured by the camera unit 300 is not affected by various angles of light made incident on the electrolyte 20, and the length value (i.e., displacement value) of the specimen 10 can be accurately measured.

### Biaxial tensile test

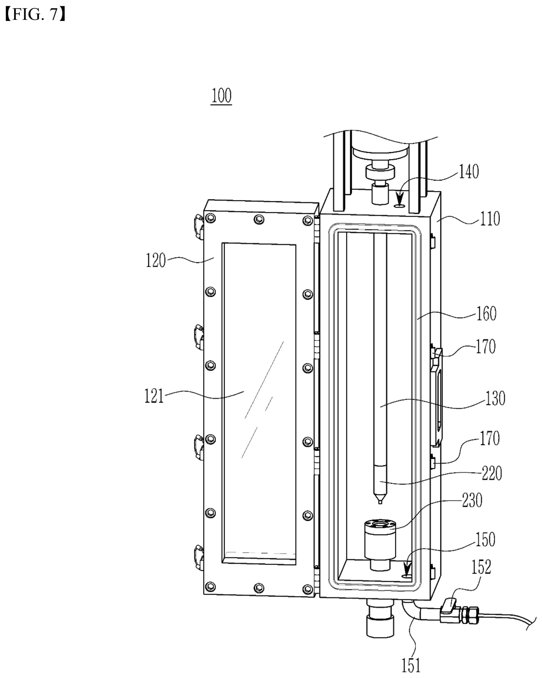

FIGS. 7 to 10 illustrate a case where a biaxial tensile test is performed in an apparatus 100 for measuring physical properties of an electrode and/or a separator according to another embodiment of the present disclosure.

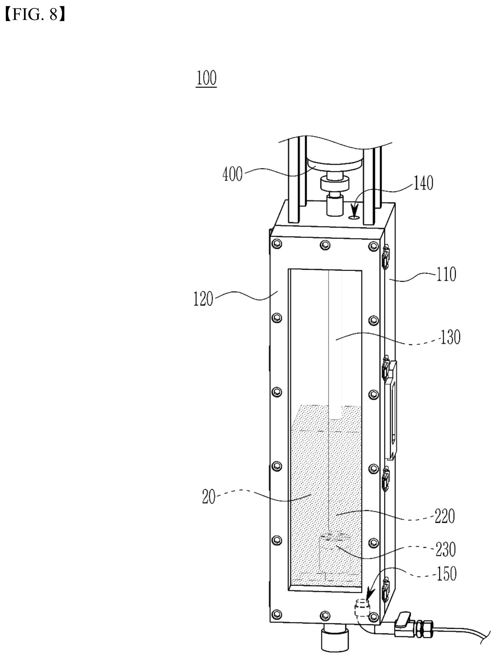

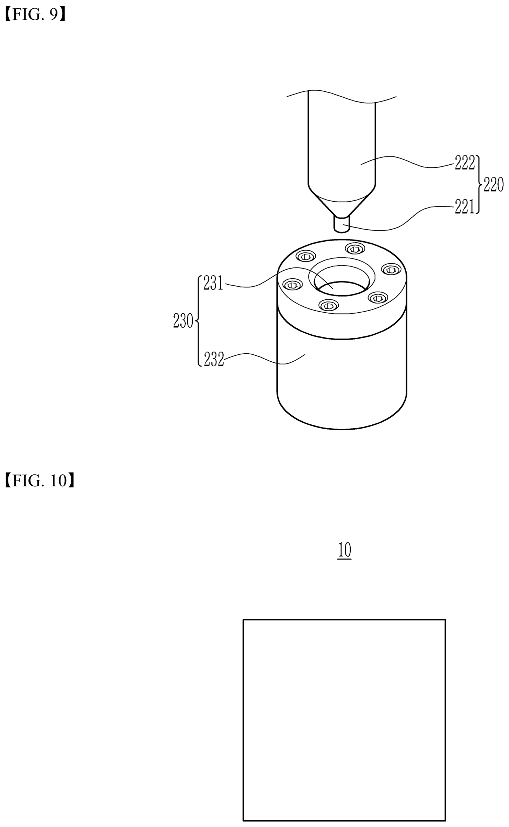

FIG. 7 is a front view of an apparatus 100 for measuring physical properties of an electrode and/or a separator according to another embodiment of the present disclosure. FIG. 8 illustrates a case where an electrolyte 20 is stored in the measuring apparatus 100 of FIG. 7. FIG. 9 is an enlarged view of the press-fit member 220 and the specimen mounting member 230 of FIG. 7. FIG. 10 illustrates a specimen 10 mounted on the measuring apparatus 100 of FIG. 7.

Embodiments of FIGS. 7 to 10 are related to biaxial tensile tests, wherein the parts different from the measuring apparatus 100 related to the uniaxial tensile test described above in FIG. 1, and the like will be mainly described.

In regard to the above-mentioned uniaxial tensile test, the case where the specimen 10 is tensioned by directly pulling it in one axial direction (the height direction of the container body 110 and the length direction of the bar 130 in the embodiment of FIG. 1) has been described. However, in regard to the biaxial tensile test in the embodiments of FIGS. 7 to 10, the biaxial tensile test can be performed by an indirect method without directly pulling the specimen 10 in two axial directions. It can be measured by pressing (punching) the specimen with a tip and measuring and converting the repulsive force of the specimen 10. In the relevant technical field, the term "press-fit" means pressing the central part of the specimen with the tip to generate a radial tensile force, rather than hitting the specimen in a short time or punching to make a hole.

The specimen 10 is prepared as a thin film as shown in FIG. 10. Next, the specimen is placed on the specimen mounting member 230 shown in FIGS. 7 to 9, and the central part of the upper surface of the specimen 10 is pressed with the press-fit member 220.

The press-fit member 220 is detachably coupled to the end part of the bar 130, and the specimen mounting member 230 is detachably coupled to the lower surface inside the container body 110. When the uniaxial tensile test described above is completed in the embodiment of FIG. 1 and then it is desired to perform the biaxial tensile test according to the embodiment of FIG. 7, a pair of grippers 210 can be detached from the press-fit member 220 and the container body 110, respectively, and then the press-fit member 220 and the specimen mounting member 230 can be mounted.

The press-fit member 220 includes a coupling part 222 that can be coupled to the end part of the bar 130 and a tip 221 that is a tip end part provided at the end part of the coupling part 222. The specimen mounting member 230 includes a body 232 that can be coupled to the lower surface inside the container body 110, and a specimen mounting part 231 provided at the upper central part of the body 232. The specimen mounting part 231 has a concave part at the central part. That is, the edge part of the lower surface of the specimen 10 contacts the edge of the specimen mounting part 231, and the central part of the lower surface of the specimen 10 is separated from the specimen mounting part 231 by a predetermined distance and is structured to float in the air.

The specimen 10 is placed on the specimen mounting part 231, and the bar 130 is moved downward to press the central part of the upper surface of the specimen 10 with the tip 221 of the press-fit member 220. The tip 221 has a relatively sharp tip end shape, but rather than being used to make a hole in the specimen 10 as soon as the specimen 10 is pressed, it is used to generate a tensile force radially on the basis of the tip 221 that presses the specimen 10. Since the central part of the lower surface of the specimen 10 is separated from the specimen mounting part 231 by a predetermined distance, the central part of the specimen 10 warps downward along the pressing direction of the tip 221. At this time, a tensile force is generated radially from the tip 221 that presses the specimen 10, so that a biaxial tensile test can be performed. In addition, a repulsive force is generated in the direction opposite to the direction in which the tip 221 presses the specimen 10 from above. Instead of directly measuring the radially generated tensile force (biaxial tensile force), a biaxial tensile test can be performed by measuring the repulsive force against the force pressing with the tip 221 and converting it. A load cell 400 is coupled to the upper end part of the bar 130. Therefore, it is possible to measure the repulsive force transmitted to the bar 130. In this case, the load cell 400 corresponds to a measuring unit.

The press-fit member 220 may be made from, for example, Teflon material in order to reduce the influence due to frictional force, but the present disclosure is not limited thereto, and a material suitable for the environment in which the invention is realized may be adopted.

The embodiments of FIGS. 7 to 10 are related to a biaxial tensile test, wherein the description of the components that overlap with the components of the measuring apparatus 100 for the uniaxial tensile test described in FIGS. 1 to 6 are omitted. Please refer to the contents set forth above.

### Compression Test

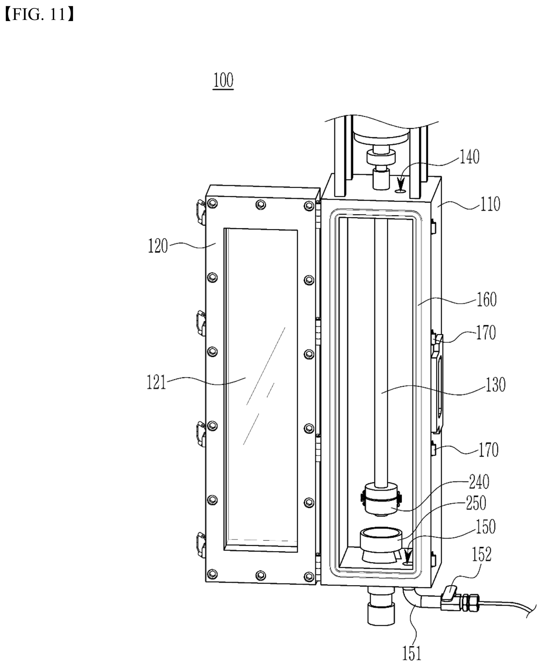

FIGS. 11 to 16 illustrate a case where a compression test is performed in an apparatus 100 for measuring physical properties of an electrode and/or a separator according to another embodiment of the present disclosure.

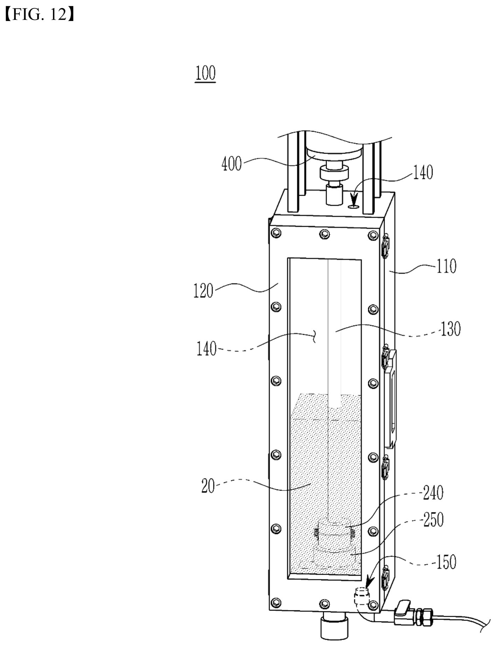

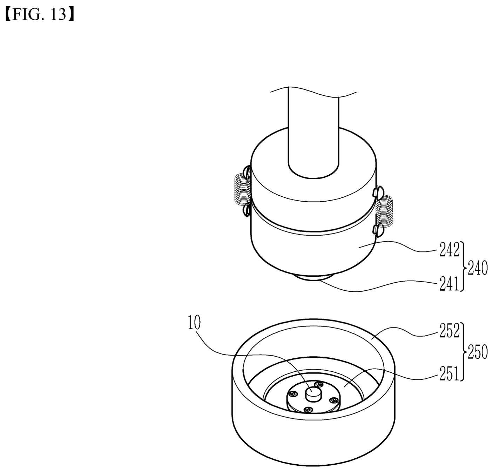

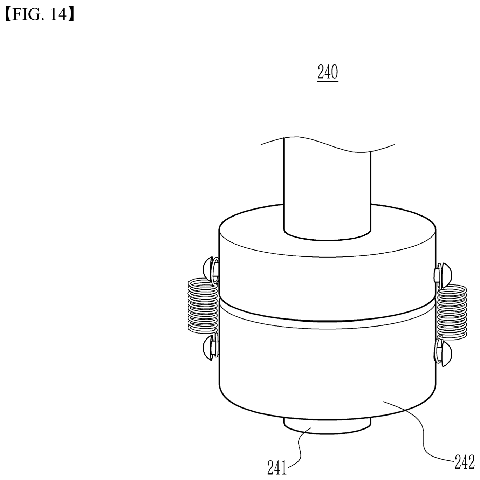

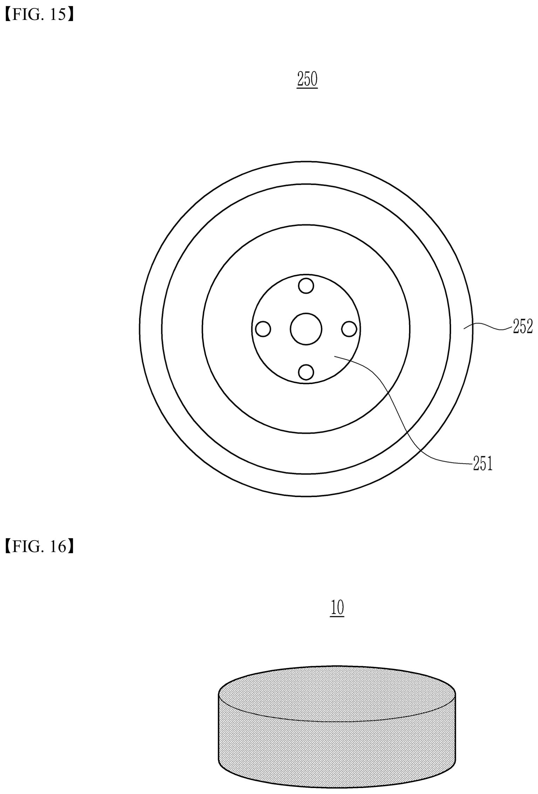

FIG. 11 is a front view of an apparatus 100 for measuring physical properties of an electrode and/or a separator according to another embodiment of the present disclosure. FIG. 12 illustrates a case where an electrolyte 20 is stored in the measuring apparatus 100 of FIG. 11. FIG. 13 is an enlarged view of the compression member 240 and the specimen mounting member 250 of FIG. 11. FIG. 14 is a front view of the compression member 240 of FIG. 13. FIG. 15 is a top view of the specimen mounting member 250 of FIG. 13. FIG. 16 shows an example of a specimen 10 mounted on the measuring apparatus 100 of FIG. 11.

The embodiments of FIGS. 11 to 16 are related to the compression test, wherein the parts different from the measuring apparatus 100 for the above-mentioned uniaxial tensile test and biaxial tensile test are mainly described.

In the embodiments related to the compression test of FIGS. 11 to 16, the specimen 10 is placed on the specimen mounting member 250, and the upper surface of the specimen 10 is pressed entirely by the compression member 240.

The compression member 240 is detachably coupled to the end part of the bar 130, and the specimen mounting member 250 is detachably coupled to the lower surface inside the container body 110. When the uniaxial tensile test described above is completed in the embodiment of FIG. 1 and then it is desired to perform the compression test according to the present embodiment, a pair of grippers 210 may be detached from the press-fit member 220 and the container body 110, respectively, and then the compression member 240 and the specimen mounting member 250 may be mounted. Alternatively, after completing the biaxial tensile test described above in the embodiment of FIG. 7, it is possible to detach the press-fit member 220 and the specimen mounting member 230, respectively, and then mount the compression member (240) and the specimen mounting member 250.

The compression member 240 includes a coupling member 242 that can be coupled to the end part of the bar 130, and a flat-shaped compression member 241 provided at the end part of the coupling member 242.

Even in the measuring apparatus 100 of the embodiment related to the biaxial tensile test of FIG. 7, the bar is moved downward to press the specimen 10 with the press-fit member 220, and even in the measuring apparatus 100 of the present embodiment related to the compression test of FIG. 11, the bar is moved downward to press the specimen 10 with the compression member 240. In the case of the biaxial tensile test of FIG. 7, the tip 221 of the press-fit member 220 has a relatively sharp tip shape (but the end is blunt by rounding or the like in order to prevent early fracture of the specimen), the tip 221 presses the central part of the specimen 10 prepared as a thin film to generate a tensile force radially including the two axes. However, since the compression part 241 of the compression member 240 of FIG. 11 has a flat shape, the upper surface of a specimen 10 (see FIG. 16) prepared in a cylindrical shape, for example, having a volume, may be pressed as a whole to perform a compression test. The specimen 10 used for the compression test can be prepared in a shape as shown in FIG. 16, for example, using a mold manufacturing machine and a testing machine such as Instron 5943.

The specimen mounting member 250 includes a body 252 that can be coupled to the lower surface inside the container body 110 and a specimen mounting part 251 provided at the upper center of the body 252. The upper surface of the specimen mounting part 251 also has a flat structure as a whole. That is, it is different from the specimen mounting part 231 that has a concave part at the central part in the embodiment of the biaxial tensile test of FIG. 7.

The upper surface of the specimen 10 is pressed by the flat surface of the compression part 241, whereby the lower surface of the specimen 10 is pressed by the flat surface of the specimen mounting part 251, so that the specimen 10 is compressed.

Although an electrode and/or a separator can be tested with the measuring apparatus 100 of the above-mentioned embodiment of the present disclosure, various variations and modifications can be made, such as being able to perform tests on a stacked mono-cell.

Next, a comparative example and an embodiment of the present disclosure relating to each of an anode, a cathode and a separator will be described. The comparative example is a case where a test is performed for a specimen 10 by a dry process according to the prior art without impregnation of the electrolyte, and the embodiment of the present disclosure is a case where a test is performed by a wet process in which the specimen 10 is impregnated with the electrolyte 20 for a predetermined period of time in the measuring apparatus 100 of FIGS. 1 to 16 described above.

### Anode

For a uniaxial tensile test, the specimen 10 was prepared as shown in FIG. 4. For a biaxial tensile test, the specimen 10 was prepared as a thin piece as shown in FIG. 10. For a compression test, the specimen 10 was prepared as shown in FIG. 16 by drying the anode active material slurry made of a graphite material having a density similar to that of the anode active material slurry coated on the current collector at 120 degrees Celsius in a cylindrical mold. In addition, for a wet process, the specimen 10 was immersed with the electrolyte 20 for at least 20 minutes before performing measurement.

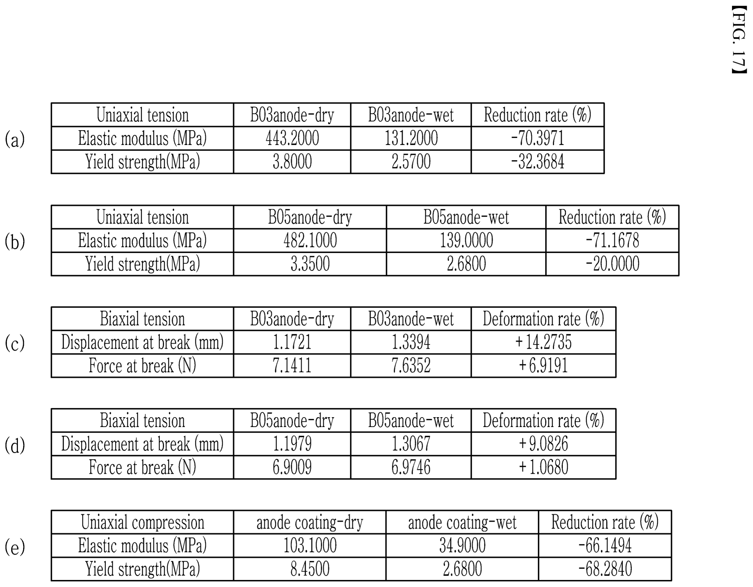

FIG. 17 shows a table comparing a case where a test was performed for the anode by a dry process according to a comparative example and a case where a test was performed for the anode by a wet process according to an embodiment of the present disclosure. In FIG. 17, (a) and (b) are the results of a uniaxial tensile test, (c) and (d) are the results of a biaxial tensile test, and (e) is the result of a compression test.

In the wet-type testing of an embodiment of the present disclosure as compared to the dry-type testing, which is a comparative example of the prior art, it can be seen that the tensile elastic modulus decreases by about 70%, the tensile yield strength decreases by 20~30%, and both the compressive elastic modulus and the yield strength decrease by about 60~70%. In other words, it can be seen that the strength decreases when the specimen 10 is impregnated with the electrolyte 20.

### Cathode

For a uniaxial tensile test, the specimen 10 was prepared as shown in FIG. 4. For a biaxial tensile test, the specimen 10 was prepared as a thin piece as shown in FIG. 10. For a compression test, the specimen 10 was prepared as shown in FIG. 16 by drying the cathode active material slurry of NCM material having a density similar to that of the cathode active material slurry coated on the current collector at 120 degrees Celsius in a cylindrical mold. In addition, for a wet process, the specimen 10 was immersed with the electrolyte 20 for at least 20 minutes before performing measurement.

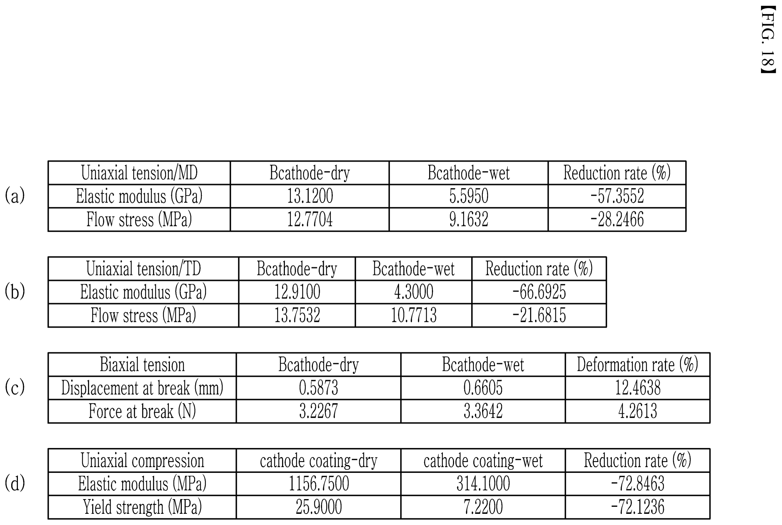

FIG. 18 shows a table comparing a case where a test was performed for the cathode by a dry process according to a comparative example and a case where a test was performed for the cathode by a wet process according to an embodiment of the present disclosure. In FIG. 18, (a) and (b) are the results of the uniaxial tensile test, (c) is the result of the biaxial tensile test, and (d) is the result of the compression test. For reference, in the case of the uniaxial tensile test, MD is the abbreviation for machine direction and TD is the abbreviation for transverse direction.

In the wet-type testing of an embodiment of the present disclosure as compared to the dry-type testing, which is a comparative example of the prior art, it can be seen that the tensile modulus decreases by about 50~60%, the tensile yield strength decreases by 20~30%, and both the compressive modulus and yield strength decrease by about 70%. In other words, it can be seen that the strength decreases when the specimen 10 is impregnated with the electrolyte 20.

### Separator

For a uniaxial tensile test, the specimen 10 was prepared as shown in FIG. 4. For a biaxial tensile test, and the specimen 10 was prepared as a thin piece as shown in FIG. 10. Polypropylene (PP) was used as the material for the separator. In addition, for a wet process, the specimen 10 was immersed with the electrolyte 20 for at least 20 minutes before performing the measurement.

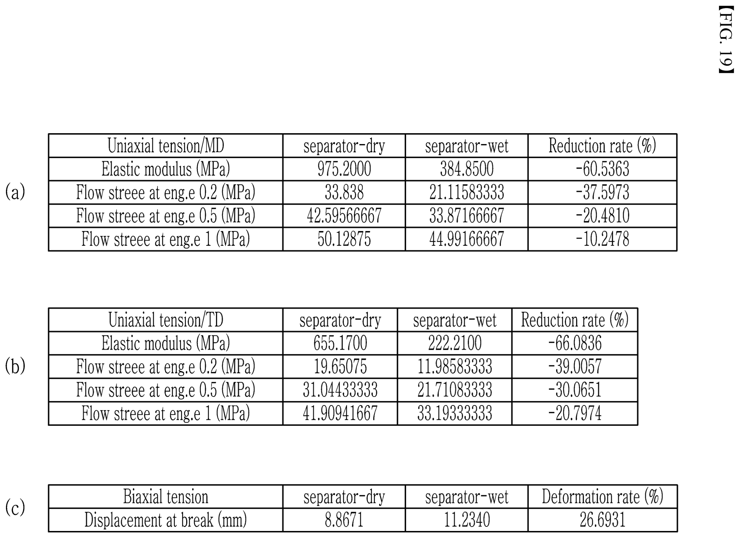

FIG. 19 shows a table comparing a case where a test was performed for the separator by a dry process according to a comparative example and a case where a test was performed for the separator by a wet process according to an embodiment of the present disclosure. In FIG. 19, (a) and (b) are the results of a uniaxial tensile test, and (c) is the result of a biaxial tensile test.

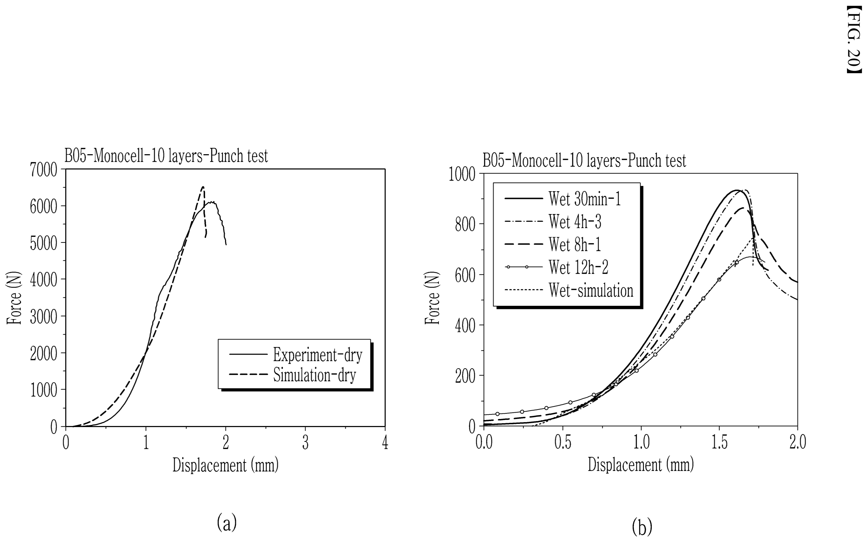

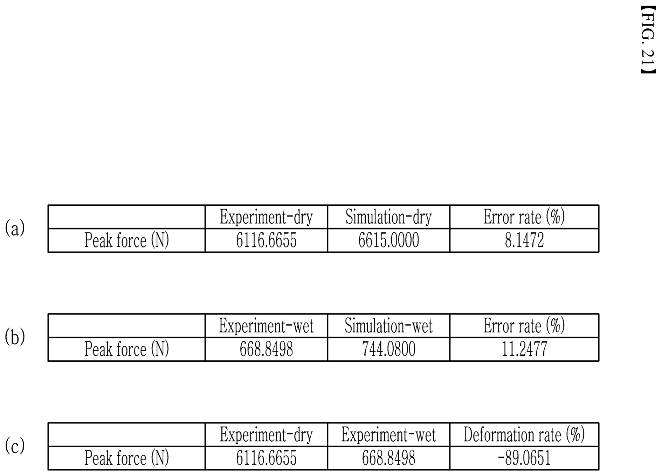

FIG. 20 shows graphs of comparative examples and examples at the cell level. FIG. 21 shows a table showing the maximum load values in the graph of FIG. 20.

The measurement was performed by punching multiple electrode stacked specimens with the press-fit member 220. FIG. 20 is a graph showing the force measured by the load cell as displacement, and FIG. 21 shows the peak value as a diagram. As can be seen from FIG. 21(b), in the case of the wet-type testing according to the embodiment of the present disclosure, the maximum load error rate is approximately 11%, which is generally consistent with the simulation case. As can be seen from FIG. 21(c), in the case of the dry testing, the error rate corresponds to approximately 90%.

Although the invention has been described in detail above with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Symbols]

100: measuring apparatus
110: container body
20: door
121: viewing window
130: bar
140: electrolyte inlet port
150: electrolyte outlet port
160: sealing member
210: gripper
220: press-fit member
230: specimen mounting member
240: compression member
250: specimen mounting member
300: camera
310: correction image
400: load cell

## Claims

1. A measuring apparatus, comprising:
a container including a body in which a specimen and an electrolyte can be stored inside; and
a measuring unit for measuring physical properties of the specimen,
wherein the specimen is at least one of an electrode and a separator for a secondary battery, and the measurement is performed under a state where the specimen is immersed with the electrolyte.

2. The measuring apparatus according to claim 1, wherein:
the container comprises at least one of an electrolyte inlet port provided at an upper part and an electrolyte outlet port provided at a lower part.

3. The measuring apparatus according to claim 1, wherein:
the container comprises a viewing window through which the inside of the container can be viewed.

4. The measuring apparatus according to claim 3, wherein:
the container further comprises a door that can open and close the body,
the door comprises an opening part, and
the viewing window is provided in the opening part.

5. The measuring apparatus according to claim 4,
further comprising a sealing member provided between the body of the container and the door to prevent the electrolyte from leaking.

6. The measuring apparatus according to claim 4, wherein:
the measuring apparatus further comprises a locking device that fixes the door to the body of the container when the door is closed.

7. The measuring apparatus according to claim 1, wherein:
the measuring apparatus further comprising a bar that penetrates through the upper surface of the container and is movable toward the specimen or to its opposite direction, and
the specimen can be tensioned or pressurized by the movement of the bar.

8. The measuring apparatus according to claim 7, wherein:
the end part of the bar is provided with a pair of grippers capable of gripping both end parts of the specimen, respectively,
wherein one of the pair of grippers is detachably coupled to the end part of the bar, and the other of the pair of grippers is detachably coupled to the lower surface inside the body of the container.

9. The measuring apparatus according to claim 7,
the end part of the bar is provided a press-fit member that is detachably coupled thereto,
the lower surface inside the body of the container is provided with a specimen mounting member that is detachably coupled thereto,
the press-fit member comprises a tip, and the specimen mounting member comprises a specimen mounting part provided with a concave part at the central part of the upper end, and
the central part of the specimen is spaced apart from the specimen mounting part.

10. The measuring apparatus according to claim 7, wherein:
the end part of the bar is provided with a compression member that is detachably coupled thereto,
the lower surface inside the body of the container is provided with a specimen mounting member that is detachably coupled thereto,
the compression member comprises a flat-shaped compression part, and the specimen mounting member includes a specimen mounting part provided at the upper end of the upper end, and
the specimen mounting part has a flat shape.

11. The measuring apparatus according to claim 7, wherein:
the measuring unit is a load cell connected to the bar.

12. The measuring apparatus according to claim 11, wherein:
the bar moves downward, and the repulsive force transmitted to the bar from the specimen is measured and converted by the load cell, thereby measuring the tensile force occurring radially at the central part of the specimen.

13. The measuring apparatus according to claim 1, wherein:
the measuring unit is a camera unit.

14. The measuring apparatus according to claim 13, wherein:
an image of the specimen is captured by the camera unit to measure the displacement of the specimen.

15. The measuring apparatus according to claim 13, wherein:
the camera unit is a DIC (digital image correlation) camera.

16. The measuring apparatus according to claim 1,
further comprising a correction image for correcting an error capable of occurring in an image captured by the measuring unit due to refraction or reflection of light by the electrolyte,
wherein the correction image as a reference image comprises a plurality of line segments on a substrate , and each of the plurality of line segments has the same length but a different slope, and
wherein the correction image immersed with the electrolyte is captured by the measuring unit, so that the measuring unit is corrected until all of the plurality of line segments have the same length.

17. The measuring apparatus according to claim 16, wherein:
each of the plurality of line segments has an inclination angle that sequentially increases with one edge of the substrate as a reference line.

18. The measuring apparatus according to claim 17, wherein:
at least some of the line segments among the plurality of line segments are arranged at approximately equal angles to each other.

19. The measuring apparatus according to claim 16, wherein:
the starting points of at least some of line segments among the plurality of line segments are different, and
the ending points of at least some of the line segments among the plurality of line segments are different.

20. The measuring apparatus according to claim 1, wherein:
the specimen is a stacked type mono-cell in which the electrode and the separator are stacked.
